(19) Europäisches Patentamt
European Patent Office
Office européen des brevets

(11) **EP 0 847 236 B1**

# (12) EUROPEAN PATENT SPECIFICATION

(45) Date of publication and mention
of the grant of the patent:
**27.03.2002 Bulletin 2002/13**

(21) Application number: **96924209.8**

(22) Date of filing: **25.06.1996**

(51) Int Cl.⁷: **A01K 63/02**, A22B 3/08

(86) International application number:
**PCT/NO96/00157**

(87) International publication number:
**WO 97/01958 (23.01.1997 Gazette 1997/05)**

(54) **PROCESS FOR HANDLING FISH, FROM ITS DELIVERY TO THE GUTTING THEREOF**

VERFAHREN ZUR FISCHBEARBEITUNG, VON LIEFERUNG BIS AUSNEHMEN

PROCEDE DE TRAITEMENT DES POISSONS DEPUIS LEUR PRISE EN COMPTE JUSQU'A LEUR EVISCERATION

(84) Designated Contracting States:
**AT BE CH DE DK ES FI FR GB GR IE IT LI LU MC NL PT SE**

(30) Priority: **03.07.1995 NO 952641**
**18.06.1996 NO 962578**

(43) Date of publication of application:
**17.06.1998 Bulletin 1998/25**

(73) Proprietor: **Steinsland, Irene (heiress of the deceased inventor)**
**5440 Mosterhavn (NO)**

(72) Inventors:
• **Fjaera, Svein, Olav**
**6600 Sunndalsora (NO)**

• **SKJERVOLD, Per, Olav**
**1430 As (NO)**
• **SVENDSEN, Olav, Jr.**
**5430 Bremnes (NO)**
• **STEINSLAND, Ove**
**deceased (NO)**

(74) Representative: **Hansson, Sven A.**
**Stockholms Patentbyra Zacco AB**
**Box 23101**
**104 35 Stockholm (SE)**

(56) References cited:
**WO-A-96/14751**       **NO-A- 863 849**
**NO-B- 160 756**

## Description

The present invention relates to a process and a plant for handling fish, particularly farmed fish, from its delivery to the gutting thereof, whereby the fish is chilled while in the water and is led or stimulated to move in the desired direction by utilizing its natural instincts, thereby to reduce stress. Using the method in accordance with the present invention, processing time is shortened, keeping quality is extended and the quality of the end product is improved, compared with fish that are handled by hitherto known processes.

A fish undergoes a series of transporting stages and individual processes on its way from a free-swimming existence to a consumer product. In all of these steps, its durability or keeping quality and the quality of the end product are affected. Quality deterioration is aggravated by factors such as temperature, physical strain, injury, infections, parasites and stress, among others. Such factors will contribute toward augmenting the rate of the biological decomposition processes and, in addition, will weaken other important criteria for quality such as consistency, appearance and flavour.

Live fish are generally brought in with fishing nets or seines from the sea or from farming enclosures/seacages, from wellboats or, less frequently, from land-based pools or ponds. In the various steps toward the finished product, the fish are subjected to a series of internal transport stages and processes, each of which individually and collectively influences the product's quality, keeping properties and price.

Transport and intermediate storage are generally carried out with fish densities of 100 kg/m$^3$ or greater. The movement of the fish into intermediate storage and then to anaesthetisation tanks in processing plants is usually done by using nets or fish pumps. This assumes a fish density greater than 500 kg/m$^3$, which results in considerable stress and mechanical injuries for the fish. Stress leads to a reduction of the elycogen reserves in the fish muscle and hastens the autolytic decomposition of the fish. Consequently, stress will have a directly deteriorating effect on the quality of the end product.

It is a disadvantage of present methods that the fish becomes frightened and stressed and may sometimes be physically injured by the landing net or other treatment involving abrupt and unexpected movements or leading to a high fish density during its internal transport within the plant prior to slaughtering. Visible injuries such as scale loss and wounds, as well as non-visible damages caused by shocks or blows, reduce the quality, price and keeping properties of the fish.

Prior to throat cutting, the fish is usually transferred by net or pumped into a smaller basin of $CO_2$-enriched cold water for anaesthetisation. After a brief period in the anaesthetisation tank, the fish is cut at the throat before being transferred to a basin of water for bleeding. The temperature of the water in the bleeding tank is usually the same as the relevant sea water temperature, as this has been seen as a necessary condition for adequate bleeding. Satisfactory bleeding is an important quality requirement, but may be difficult to achieve at high temperatures where the blood of the fish coagulates more easily. After a period of time spent in the bleeding tank, the fish is usually moved into a tank of refrigerated water for chilling prior to gutting/filleting, or sent directly to gutting/filleting with subsequent chilling. Chilling of fish in dead state results in poor distribution of the fish in the basin, which leads to inferior heat transfer and thus less effective chilling. After gutting/filleting, the fish is sent for packing, followed by cold transport or storage in a refrigerator or freezer.

The process water used for the bleeding and washing of fish for slaughter is a potential source of contamination and infection and, in Norway, for example, is subject to regulations regarding special collection and destruction measures. Consequently, to reduce the costs associated with such processing, it is an objective to reduce the quantity of process water used per kilo of slaughtered fish. The standard ratio in Norwegian salmon packing plants is 5 - 10 l/kg fish.

It is known that lowered temperature in the whole body of the fish when processed and packaged enhances the quality of the end product. The low temperature reduces both bacterial growth and autolytic enzyme processes. It is advantageous to carry out the chilling as rapidly as possible. This applies for most of the critical decomposition processes. For example, regulations stipulate a maximum temperature of 4° C for fish on packing. In chilling that follows bleeding, it is often difficult to attain the regulation packing temperature before rigor mortis has set in.

Small fish are chilled more rapidly than large fish. When sea water temperatures are high, the required dwelling time for the fish in the chilling tanks will vary greatly between large and small fish. In practical operation, therefore, a cooling time is selected which is unnecessarily long for small fish and too brief for the largest individual fish. For the measuring and documentation of the actual temperature of the fish, selected large fish must be brought to the surface to confirm that the core temperature is low enough for packing. This procedure entails delays and lowered effectivity and is therefore frequently omitted.

Delays in the cooling process often lead to the onset of rigor mortis at an inconvenient time in relation to packing and are considered a more serious problem than a somewhat high core temperature in packing.

Depending on temperature and stress, rigor mortis will occur in the fish some time after the fish has been killed. Handling of the fish after rigor mortis has set in is damaging to the fish meat and must be avoided. The time ensuing after the fish is cut for bleeding until it is packed must be kept short enough that rigor mortis does not occur.

In current methods, where the fish is primarily chilled after bleeding, it is often difficult, as mentioned above, to avoid advanced rigor mortis at the time of packing.

Parasites, such as salmon lice, for example, often appear in large quantities on the surface membranes of the fish. These are generally removed manually, which process may increase by up to 30% the time used by packing houses to handle batches of fish for slaughter which contain many parasites. If not removed, the presence of parasites will result in a substantial downgrading of the product's quality. Fish meat is free of bacteria in live state. Bacteria appear in the stomach contents, in the intestines and on surface membranes. When the bacteria count is high, the keeping properties of the fish will be curtailed.

In recent years numerous attempts have been made to overcome one or more of the aforementioned disadvantages of the known handling technique.

In publicly available Norwegian Patent Application No. 863849 there is described a method for preservative handling of farmed fish prior to packing, transport and storage. In this method, seacages or other forms of enclosures containing fish for slaughter are conducted into chilled water which has been mixed with an anaesthetic or partially anaesthetic gas or liquid. The fish is then moved, if necessary, into another basin where the water temperature lies at about -1C° and where the free air in the water is replaced to a substantial degree with $CO_2$ or another anaesthetic or tranquilizing gas. The fish is then brought up and cut for bleeding, and the cut but still live fish is released into a basin or tank of oxygen-enriched water having a temperature of more than +3°C, where the fish can swim off the blood. From this basin the fish is taken up and chilled to about -1°C in brine and is packed in thermally insulated packaging, which preferably has been prechilled.

From the description in the above cited application, it appears evident that the handling of the fish takes place in a seacage or enclosure, until the fish is brought on land after bleeding. In the final cooling stage the fish is chilled to -1°C, which in practice would require a very long time, allowing rigor mortis to set in before the fish is packed. Furthermore, this would entail subjecting the fish to serious conditions of stress if the free air in the water is removed as indicated. Bleeding at +3°C, as disclosed in the above mentioned application, would transpire slowly, and a warming of the fish would unavoidably occur. Consequently, the process which has been described above is burdened with a number of serious disadvantages.

It is known that fish can be induced to move in desired directions with the aid of, e.g., pivotable walls, as described in NO B 155371. Further, NO B 162443 shows the transfer of fish where the volume is reduced by means of a rotatable device. DE 2 000 073 describes a water container having a slanted bottom that slopes toward the outlet. The bottom may be displaced vertically by means of motor power, whereby the volume of the container is reduced.

The present invention provides a process for handling fish, particularly farmed fish, from its delivery to the gutting thereof, whereby the fish is chilled while in the water and is led or stimulated to move in the desired direction by utilizing its natural instincts, thereby to reduce stress, which is characterized in that the fish within a closed system is induced to move through the following handling stages:

- from a starting unit, such as a holding enclosure/seacage, a wellboat or a receiving tank, in which the water temperature optionally may be lowered to about 10°C, the fish is brought on land by being induced to swim into an elevator or fish conveyor,
- from the elevator/conveyor the fish is brought, optionally after intermediate storage, to a chilling tank where it is chilled to a predetermined core temperature, normally down to 1°C in the course of 20 to 100 minutes,
- after the fish has reached the desired core temperature, it is subjected to the effect of an anaesthetic,
- the fish is then cut at the throat for bleeding and conducted to a bleeding tank, which has a water temperature 0.5 to 1°C higher than the water in the chilling tank, and
- the fish is subsequently gatted,
- where the tanks have adjustable water temperature and equipment for the supplying of optionally chilled water, for supplying of anaesthetic, optionally for the supplying of oxygen and for the recirculation and filtration of water. The basins and tanks holding the fish are optionally provided with colour and light so that the fish assumes a colour in its exterior membranes that is desirable for the relevant species of fish, and to the cooling water during the movement of the fish through the tanks to the stage where it is cut for bleeding, there is optionally added a bactericide and/or parasiticide for the purpose of reducing the bacteria count on the surface membranes of the fish and/or to remove parasites, and optionally for supplying further additives.

The combination of these handling stages results in a significant productivity gain in the slaughtering process. Furthermore, the recirculation of the chilled water in the various tanks is associated with reduced energy consumption, reduced water consumption and substantial reduction of potential environmental contamination. In test runs, a level of water consumption of less than 1 liter per kilo of slaughtered fish has been attained.

As opposed to being moved by nets and pumps, the fish is transported, according to the present invention, primarily by means of its own swimming power, in that the transporting devices offer the fish a lower density in the chambers receiving it than in the chambers discharging it. This is achieved by gradual reduction of the available volume in the discharging chamber at the same rate as the emigration of the fish therefrom. The fish densities during movement of the fish are held at a considerably lower level in the present invention than in traditional methods. The fish is also led in the desired direction with the aid of a slanted bottom sloping toward the outlet, by differences in light and colour between the discharging tanks and the receiving tanks, and by the use of currents in the water that encourage the fish to move against the stream.

According to a preferred embodiment, flavour additives are supplied to the water or to dissolved gases in the water, as further additive substances, to influence the flavour of the fish. Alternatively, or in addition to these, carbohydrates are added to increase the glycogen content in the muscle of the fish on slaughtering.

According to a preferred embodiment of the invention, hydrogen peroxide is employed as the bactericide or parasiticide. This gives the present method further advantages compared with the known art. Since hydrogen peroxide decomposes very quickly into oxygen and water, there arise no problems with regard to residual products in the fish meat. Thus one avoids the quarantine time that is necessary with other chemical agents of this type. In addition, hydrogen peroxide will emit oxygen to the water, as mentioned above, which means that the amount of oxygen to be added may be reduced or omitted. The fish may beneficially remain in water to which hydrogen peroxide has been added until it is cut for bleeding. In the bleeding stage, however, this component should not be present, as blood would be a catalyst for the processes that transpire, and it would therefore not be possible to control the breakdown of hydrogen peroxide as effectively.

By using hydrogen peroxide, for example, it has been shown that salmon lice are removed and the bacteria count on the surface membranes of the fish is reduced, even when only very small amounts (ppm) are added. Parasites that are released are trapped by filtration from the circulating cooling water.

In the process according to the invention, the tanks and chambers holding the fish are provided with specific colours and light conditions. Fish are able to change their surface colour rapidly in conformity with their surroundings in order to protect themselves from predators. If such colour changes occur immediately prior to slaughtering, they will also be retained after slaughtering, and the fish can be influenced to take on colour nuances that are preferable in the market. Experiments with this type of active colour modification of salmon indicate that holding live fish in a tank with light and a white tank colour for 60 minutes yields salmon having a lighter surface colour than they had at the starting point, with a corresponding effect for other colour and lighting alternatives. In this connection, it should be stated that such influencing of colour may also be achieved by the addition of a pigment/colourant to the water.

With the process according to the present invention, there is achieved a more rapid drop in temperature at the center of the fish, compared to traditional chilling after throat cutting. Experiments with the chilling of live fish have demonstrated a time savings of 46% compared with chilling of dead fish under otherwise identical conditions. This major difference in the chilling of fish in live and in dead state is due to the heat conducting capacity in the fish, the fact that the tank is provided with a current, and the fact that the fish are given the opportunity to swim and to distribute themselves throughout the entire volume of the tank.

The temperature in the various chambers may also be regulated automatically, and the water in the tanks is filtered and recirculated, thereby considerably reducing water consumption and the strains on the environment.

Furthermore, with the present invention it has become possible to predict and define the core temperature in the fish after completion of bleeding.

To arrive at this relation, dead and live fish having different weights (sizes) were tested with a progressively longer chilling time. In these tests, the fish were moved with a net from the seacage directly into the chilling tank. The temperature was measured by injecting a needle-mounted temperature probe into the fish muscle. The point of measurement was in the muscle near the backbone below the center of the dorsal fin. Several groups of fish were measured by this method for various chilling periods of from 17 to 131 minutes in duration. The dead fish had a chilling time of from 25 to 57 minutes.

The fish weight and the core temperature were measured after the chilling period. Each fish had a defined chilling period. From the results of the tests, formulae were developed to estimate the required time for chilling, based on the temperature of the sea water, the temperature of the cooling water and the required core temperature in the fish after chilling.

It was found that the core temperature of the fish could be described by the following equation:

$$T_F = (T_S + T_{DA} - T_K - T_{DB}L)e^{-(a+b+c)m^{-0.55}t} + T_K + T_{DB}L$$

where

$T_F$ is the core temperature in the fish (°C)
$T_K$ is the cooling water temperature (°C)

$T_S$ is the water temperature difference prior to chilling (°C)
$T_{DA}$ is the temperature difference in the fishing water prior to chilling (°C)
$T_{DB}$ is the temperature difference in the fishing water after chilling (°C)
L - Factor (live fish; L=1, dead fish; L=2)
m - Weight of the fish (kg)'
t - Chilling time (min.)
a,b,c - Coefficients.

The coefficients a, b, c for salmon, in this example, were found by applying non-linear regression, the "method of least squares."

a=0.0287
b=0.0225
c=0.0416
$R^2$=0.892.

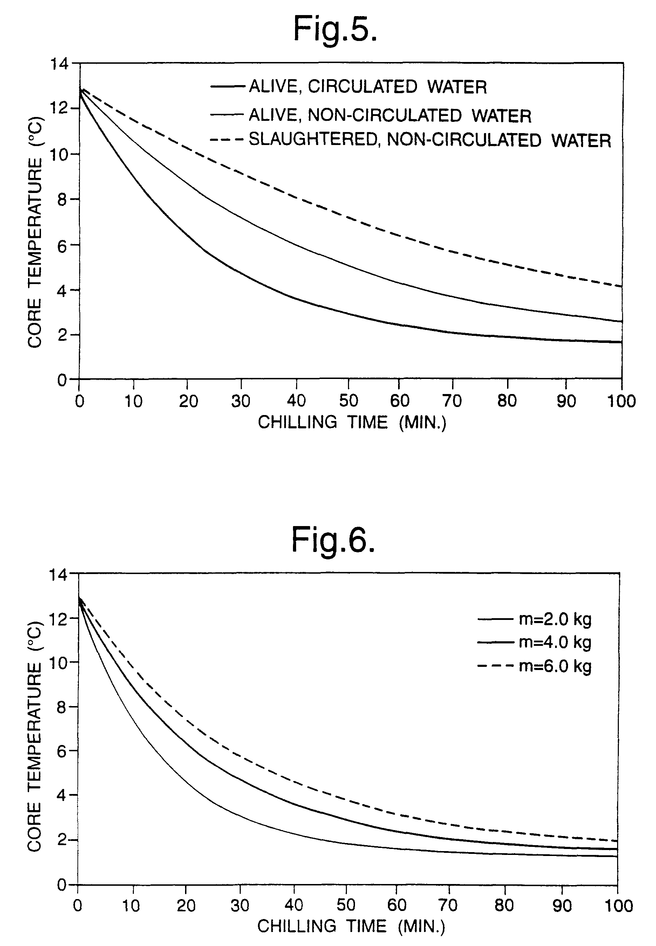

Figure 5 shows how the core temperature of salmon will develop with the application of various chilling methods for a defined fish size (m=4.0 kg), temperature of the cooling water $T_K$=1°C and temperature of sea water $T_S$=12.0°C. From this figure it is clearly apparent that the solution employed in the present invention, namely the chilling of live fish in circulating water, produces the most rapid reduction of the core temperature.

Figure 6 shows the development of the core temperature for fish of various sizes in the chilling of live fish in circulating water of 1°C and a sea water temperature $T_S$=12.0°C.

The early chilling of the live fish produces an improvement in quality by contributing further to the reduction of the stress effect on the fish and by ensuring a uniform temperature, below 4°C at the core of the fish, in good time prior to packing, and thereby also reduces the total time required for the processing of the fish.

Chilling in ice according to the known art has very little effectivity compared with chilling in water. The chilling that takes place after the fish has been packed in a box with ice is therefore relatively ineffective. Besides the fact that chilling in this phase takes place at an unduly late point in time, the chilling rate is very low.

For salmon, experimental work has resulted in a reduction of about 50% in manual labor and a reduction of from 1/2 to 1 hour in the processing time.

A further advantage of the invention is that the dwelling time for the fish in the chilling tanks is infinitely adjustable, thereby ensuring the attainment of a pretermined core temperature when the fish weight and the temperature of the sea, surroundings and chilling tanks are known. It has proven advantageous for the process that the chilling be completed as early as possible, thus making it unnecessary to undertake chilling after bleeding.

Experiments with chilling of fish in live state show a substantially better bleeding of salmon, compared with traditional bleeding where the blood of the fish and the water in the bleeding tank have a higher temperture.

It is known that factors which delay rigor mortis also improve the keeping quality of the fish. The length of time prior to the onset of rigor mortis can thereby be used as a measurement of the keeping quality of the fish. Due to the gentle handling in the internal transport of the live fish and to the reduction of the temperature of the fish while alive, test runs have shown that the onset of rigor mortis can be delayed for a considerable period of time.

In experimental work with salmon, for example, this delay has reached a period of up to 17-18 hours, as opposed to the usual period of from 1/2 to 4 hours. This provides a substantial improvement in keeping quality of the finished products and greater insurance that the fish will not be handled after the onset of rigor mortis.

The invention will be elucidated in further detail in the following, with reference to the accompanying figures, where

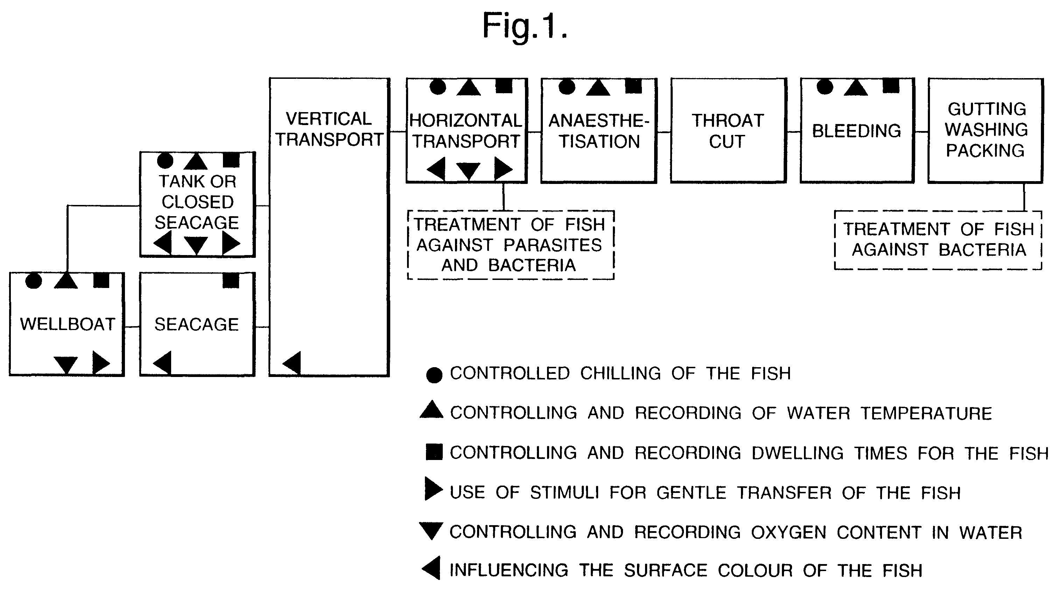

Figure 1 is a flow chart illustrating an embodiment of the present invention.

Figure 2 is an example of a layout for a treatment plant for fish.

Figure 3 is a cross-sectional view of the layout from Figure 2.

Figure 4 is a elevational and cross-sectional view of an example of a chilling tank and a bleeding tank.

Figure 5 is a graphical representation showing the core temperature as a function of chilling time for various chilling methods.

Figure 6 is a graphical representation showing the core temperature as a function of chilling time for fish of various sizes.

The invention will be illustrated further with the aid of the following, example.

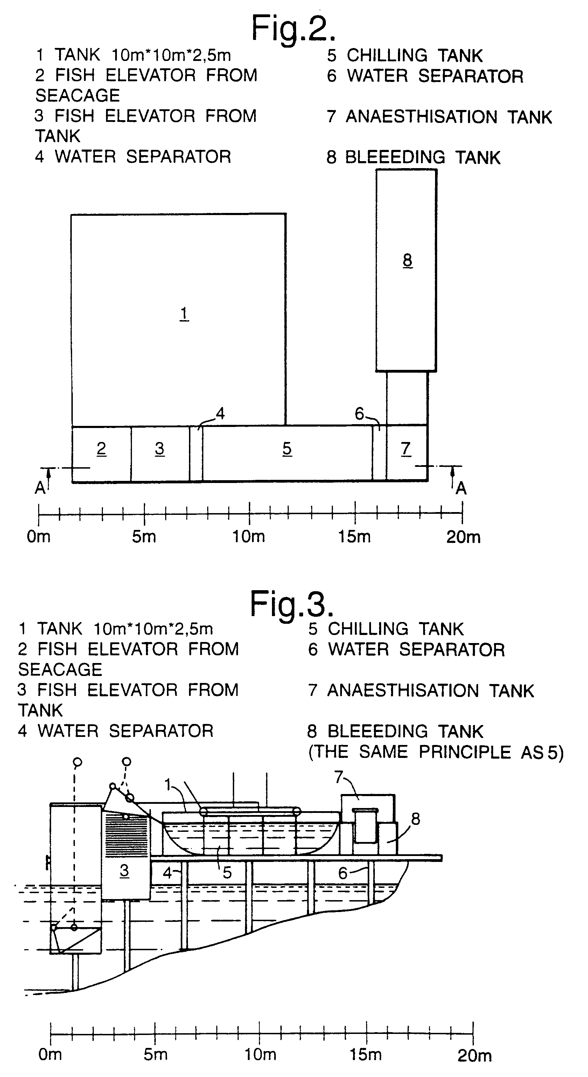

The present embodiment example refers to a plant designed in accordance with Figures 2 to 4. Uniform chilling of large and small fish was achieved by prechilling the fish down to a temperature of 8-10°C in a receiving tank (1) for fish. The fish is transported to the receiving tank by means of a fish elevator (2), either from a wellboat or from a seacage outside the quay. At the beginning, the water temperature may vary from 4° to 20°C when the fish is brought to a plant on the coast of Northern Europe; in warmer climates it may be as high as 30°C (does not apply to salmon). The water in the receiving tank may either be deep water that is pumped up, refrigerated water or a combination of these two water supplies.

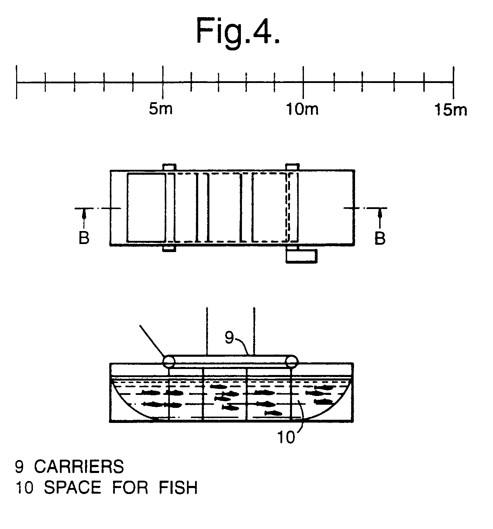

After a certain period of time in the receiving tank (1), which may be one night or about 12 hours, the fish is conducted via a fish conveyor/elevator (3), in portions, over a water separator (4) and into a tank (5), where the water temperature is as low as 0°C. In this tank are situated gates or carriers (9) which are secured to an endless belt, as shown in Figure 4. The carriers (9) are attached to the belt a certain distance apart, thus forming separate compartments (10). Further, the carriers (9) at the end of the tank will lift the fish as does a fish conveyor or elevator. The belt is moved at a speed which has been preadjusted so as to ensure the fish a specific dwelling time in the tank in relation to the size and temperature of the fish in the chilling tank. The customary dwelling time in Northern Europe may be about 1 hour. After the cooling tank (5), the fish is moved over a new water separator (6) and into an anaesthetisation tank (7), where the fish is anaesthetised by entering water infused with an anaesthetic gas, such as $CO_2$, for a period of from 1 to 5 minutes. To maintain the temperature of the fish, the water temperature is low; water at a temperature as low as -5°C (brine) may be used.

Then the cutting of the fish is carried out on a cutting table, and the fish is transferred to a bleeding tank (8). This bleeding tank is designed in the same way as the chilling tank (5). It ensures the fish a requisite dwelling time in the tank, of between 40 and 60 minutes, allowing it to bleed sufficiently. The bleeding time is dependent on the type and the size of the fish. The temperature in the bleeding tank should be 0.5 to 1°C higher than the temperature of the water in the chilling tank.

This method ensures that both large and small fish are chilled more uniformly, and the time ensuing from when the fish emerges from the bleeding tank to when it is packed in boxes is reduced significantly. The fact that the fish is cold when packed also reduces the need for ice in the boxes.

**Claims**

1. A process for handling fish, particularly farmed fish, from its delivery to the gutting thereof, whereby the fish is chilled while in the water and is led or stimulated to move in the desired direction by utilizing its natural instincts, thereby to reduce stress, comprising the following handling stages:

   (a) from a starting unit, such as a holding enclosure/seacage, a wellboat or a receiving tank, the fish is brought on land,
   (b) the fish is then transferred to a chilling tank where it is chilled to a predetermined core temperature,
   (c) after the fish has reached the desired core temperature it is transferred to an anaesthetion basin where it is subjected to the effect of an anaesthetic,
   (d) the fish is then cut for bleeding and transferred to a bleeding tank, and
   (e) the fish is subsequently gutted, **characterized in that**

   - the fish in step (a) is brought on land by being induced to swim into an elevator or fish conveyor,
   - in step (b) the predetermined core temperature is about 1 degree Centigrade and the chilling time is 20 to 100 minutes, and
   - in step (d) the water temperature is 0,5 to 1 degree Centigrade higher than the water in the chilling tank.

2. A process according to claim 1, **characterized in that** said holding tanks or basins are provided with colour and light so that the fish assumes a colour in its exterior membranes that is desirable for the relevant species of fish.

3. A process according to claim 1 or 2, **characterized in that** to the cooling water during the movement of the fish through the tanks to the stage where it is cut for bleeding, there is added a bactericide and/or a parasiticide for the purpose of reducing the bacteria count on the surface membranes of the fish and/or to remove parasites.

4. A process according to claim 3, **characterized in that** hydrogen peroxide is used as the bactericide or parasiticide, whereby hydrogen peroxide is also added for the purpose of supplying oxygen to the chilling tank.

5. A process according to the preceeding claims, **characterized in that** as further additives there are added flavour additives to the water or dissolved gases in the water to influence the flavour of the fish, and/or carbohydrates are added to increase the glycogen content in the muscle of the fish on slaughtering.

6. A process according to the preceeding claims, **characterized in that** the fish is moved through the process by means of a combination of voluntary movement, movable chambers, chambers provided with carriers and the influence of light and/or colour.

7. A process according to any one of claims 2-6, **characterized in that** the colour and light modification to attain a particular colour in the exterior membranes of the fish is accomplished by means of coloured walls in the chambers, coloured light or the addition of a pigment/colourant to the water.

**Patentansprüche**

1. Verfahren für die Behandlung von Fisch, insbesondere von Zuchtfisch, von der Anlieferung bis zum Ausnehmen, wobei der Fisch gekühlt wird, während er sich im Wasser befindet, sowie unter Verwendung seiner natürlichen Instinkte in die gewünschte Richtung geführt wird oder dazu stimuliert wird, sich in die gewünschte Richtung zu bewegen, um dadurch Stress zu vermindern, wobei das Verfahren folgende Behandlungsschritte aufweist:

(a) aus einer Ausgangseinheit, wie einem Aufnahmebehältnis/Meereskäfig, einem Bünnschiff oder einem Aufnahmebecken, wird der Fisch an Land gebracht,
(b) der Fisch wird dann in ein Kühlbecken verbracht, in dem er auf eine vorbestimmte Kerntemperatur gekühlt wird,
(c) nachdem der Fisch die gewünschte Kerntemperatur erreicht hat, wird er in ein Betäubungsbecken verbracht, in dem der Fisch der Wirkung eines Betäubungsmittels ausgesetzt wird,
(d) der Fisch wird dann zum Ausbluten abgestochen und in ein Ausblutbecken verbracht, und
(e) der Fisch wird anschließend ausgenommen,

**dadurch gekennzeichnet,**

- **dass** der Fisch in dem Schritt (a) dadurch an Land gebracht wird, dass man ihn dazu veranlaßt, in eine Hebe- oder Fischfördereinrichtung zu schwimmen,
- **dass** in Schritt (b) die vorbestimmte Kerntemperatur ca. 1 °C beträgt und die Kühlzeit 20 bis 100 Minuten beträgt, und
- **dass** in Schritt (d) die Wassertemperatur ca. 0,5 bis 1 °C höher ist als die des Wassers in dem Kühlbecken.

2. Verfahren nach Anspruch 1,
**dadurch gekennzeichnet, dass** die Haltebecken oder
-bassins mit Farbe und Licht versehen werden, damit der Fisch in seinen äußeren Membranen eine Farbe annimmt, die für die betreffende Fischspezies wünschenswert ist.

3. Verfahren nach Anspruch 1 oder 2,
**dadurch gekennzeichnet, dass** dem Kühlwasser, in dem sich der Fisch durch die Becken bis zu der Stufe bewegt, in der er zum Ausbluten abgestochen wird, ein Bakterizid und/oder ein Parasiten tötendes Mittel zum Zweck der Reduzierung der Bakterienanzahl auf den Oberflächenmembranen des Fisches und/oder zum Entfernen von Parasiten zugesetzt wird.

4. Verfahren nach Anspruch 3,
**dadurch gekennzeichnet, dass** Wasserstoffperoxid als Bakterizid oder Parasiten tötendes Mittel verwendet wird, wobei Wasserstoffperoxid auch zum Zweck der Zufuhr von Sauerstoff in das Kühlbecken zugesetzt wird.

5. Verfahren nach einem der vorausgehenden Ansprüche,
**dadurch gekennzeichnet, dass** als weitere Zusatzstoffe dem Wasser Geschmackszusätze oder im Wasser gelöste Gase zugesetzt werden, um den Geschmack des Fisches zu beeinflussen, und dass Kohlenhydrate zugesetzt werden, um den Glycogengehalt in dem Muskelfleisch des Fisches beim Schlachten zu steigern.

6. Verfahren nach einem der vorausgehenden Ansprüche,
**dadurch gekennzeichnet, dass** der Fisch durch eine Kombination aus freiwilliger Bewegung, beweglichen Kammern, mit Trägern versehenen Kammern sowie dem Einfluss von Licht und/oder Farbe das Verfahren durchläuft.

7. Verfahren nach einem der Ansprüche 2 bis 6,
**dadurch gekennzeichnet, dass** die Farben- und Licht-Modifizierung zum Erzielen einer bestimmten Farbe in den äußeren Membranen des Fisches erreicht wird mittels farbiger Wände in den Kammern, durch farbiges Licht oder durch Zugabe eines Pigments/Farbstoffs in das Wasser.

**Revendications**

1. Procédé de traitement du poisson, en particulier le poisson d'élevage, depuis sa sortie jusqu'à son éviscération, dans lequel le poisson est réfrigéré dans l'eau puis est conduit ou stimulé pour se déplacer dans la direction souhaitée en utilisant ses instincts naturels, afin de réduire de ce fait le stress, comprenant les étapes de traitement suivantes :

   (a) depuis une unité de départ, telle qu'une enceinte/cage de mer de rétention, un bateau à réservoir ou un vivier, on amène le poisson à terre,
   (b) on transfère ensuite le poisson jusqu'à un réservoir de réfrigération où on le refroidit jusqu'à une température centrale déterminée au préalable,
   (c) après que le poisson a atteint la température centrale souhaitée, on le transfère dans un bassin d'anesthésie où il est soumis à l'effet d'un anesthésique,
   (d) le poisson est alors entaillé pour être saigné et transféré à un réservoir de saignement, et
   (e) le poisson est ensuite éviscéré,

   **caractérisé en ce que**

   - on amène à terre le poisson à l'étape (a) en l'amenant à nager dans un élévateur ou un convoyeur à poisson,
   - à l'étape (b) la température centrale déterminée au préalable est d'environ 1 degré Celsius et le temps de réfrigération est de 20 à 100 minutes, et
   - à l'étape (d) la température de l'eau est de 0,5 à 1 degré Celsius supérieure à celle de l'eau du réservoir de réfrigération.

2. Procédé selon la revendication 1, **caractérisé en ce que** lesdits réservoirs ou bassins de rétention sont pourvus de couleur et de lumière de sorte que le poisson prend une couleur dans ses membranes extérieures qui est souhaitable pour l'espèce de poisson concernée.

3. Procédé selon la revendication 1 ou 2, **caractérisé en ce qu'**on ajoute à l'eau de refroidissement, pendant le déplacement du poisson dans les réservoirs jusqu'à l'étape où il est entaillé pour être saigné, un bactéricide et/ou un parasiticide dans le but de réduire le nombre de bactéries sur les membranes de surface du poisson et/ou de supprimer les parasites.

4. Procédé selon la revendication 3, **caractérisé en ce que** l'on utilise du peroxyde d'hydrogène comme bactéricide ou parasiticide, le peroxyde d'hydrogène étant également ajouté dans le but de fournir de l'oxygène au réservoir de réfrigération.

5. Procédé selon les revendications précédentes, **caractérisé en ce que**, comme additifs supplémentaires, on ajoute des additifs aromatiques à l'eau ou des gaz dissous dans l'eau pour influer sur l'arôme du poisson, et/ou on ajoute des hydrates de carbone pour augmenter la teneur en glycogène des muscles du poisson lors de l'abattage.

6. Procédé selon les revendications précédentes, **caractérisé en ce que** l'on fait se déplacer le poisson dans les différentes étapes au moyen d'une combinaison de mouvements volontaires, de chambres mobiles, de chambres munies de bacs et de l'influence de la lumière et/ou de la couleur.

7. Procédé selon l'une quelconque des revendications 2 à 6, **caractérisé en ce que** la modification de couleur et de lumière pour obtenir une couleur particulière dans les membranes extérieures du poisson est accomplie au moyen de parois colorées dans les chambres, de lumière colorée ou de l'addition d'un pigment/colorant dans l'eau.

# Fig.1.

| | | | | | | |
|---|---|---|---|---|---|---|
| | | VERTICAL TRANSPORT | HORIZONTAL TRANSPORT | ANAESTHE-TISATION | THROAT CUT | BLEEDING | GUTTING WASHING PACKING |

TANK OR CLOSED SEACAGE

WELLBOAT    SEACAGE

TREATMENT OF FISH AGAINST PARASITES AND BACTERIA

TREATMENT OF FISH AGAINST BACTERIA

● CONTROLLED CHILLING OF THE FISH

▲ CONTROLLING AND RECORDING OF WATER TEMPERATURE

■ CONTROLLING AND RECORDING DWELLING TIMES FOR THE FISH

▶ USE OF STIMULI FOR GENTLE TRANSFER OF THE FISH

▼ CONTROLLING AND RECORDING OXYGEN CONTENT IN WATER

◀ INFLUENCING THE SURFACE COLOUR OF THE FISH

EP 0 847 236 B1

# Fig.2.

1 TANK 10m*10m*2,5m
2 FISH ELEVATOR FROM SEACAGE
3 FISH ELEVATOR FROM TANK
4 WATER SEPARATOR

5 CHILLING TANK
6 WATER SEPARATOR

7 ANAESTHISATION TANK

8 BLEEEDING TANK

# Fig.3.

1 TANK 10m*10m*2,5m
2 FISH ELEVATOR FROM SEACAGE
3 FISH ELEVATOR FROM TANK
4 WATER SEPARATOR

5 CHILLING TANK
6 WATER SEPARATOR

7 ANAESTHISATION TANK

8 BLEEEDING TANK
(THE SAME PRINCIPLE AS 5)

10

# Fig.4.

5m       10m       15m

B          B

9

10

9 CARRIERS
10 SPACE FOR FISH

# Fig.5.

# Fig.6.